# EUROPEAN PATENT APPLICATION

(11) **EP 1 895 221 A2**
(43) Date of publication of application: **05.03.2008**
(21) Application number: 07014320.1
(22) Date of filing: 20.07.2007
(51) Int. Cl.: F16L 7/00

(54) **Reinforcing block for the hollow tongues of a spacer for fluid conveying pipes**

(30) Priority: 04.09.2006 IT MI20061681
(71) Applicant: Stampa Tecnica Articoli Materiali Plastici- S.T.A.M.P. S.P.A., 20060 Pozzuolo Martesana (Milano) (IT)
(72) Inventor: Guerini, Carlo, 20060 Pozzuolo Martesana (Milano) (IT)
(74) Representative: Coggi, Giorgio

(57) **Abstract**

A block (1, 1') is described, destined to be inserted into a hollow spacer tongue (3) belonging to a spacer (2) for fluid conveying pipes.

The blocks (1, 1') are preferably made of plastic material and at least the surface (7, 7') thereof in contact with the inner pipe is, preferably, made of or coated with silicone rubber (or with another equivalent plastic material) to hold the spacer (1) in place during the insertion of the inner pipe into an outer pipe and do not damage the inner pipe.

The blocks (1, 1') are advantageously inserted only into the hollow spacer tongues (3) belonging to the portion of the spacer (2) on which the weight of the inner pipe bears, to stiffen said spacer tongues (3) and to make them able to support the weight of the inner pipe.

## Description

The present invention refers to a reinforcing block, preferably of plastic material, designed to be inserted into at least one of the hollow spacer tongues of a spacer for fluid conveying pipes.

Reinforcing blocks are advantageously inserted only in the hollow spacer tongues belonging to the portion of the spacer on which the weight of the inner pipe bears, to stiffen said spacer tongues and to make them able to support the weight of said inner pipe.

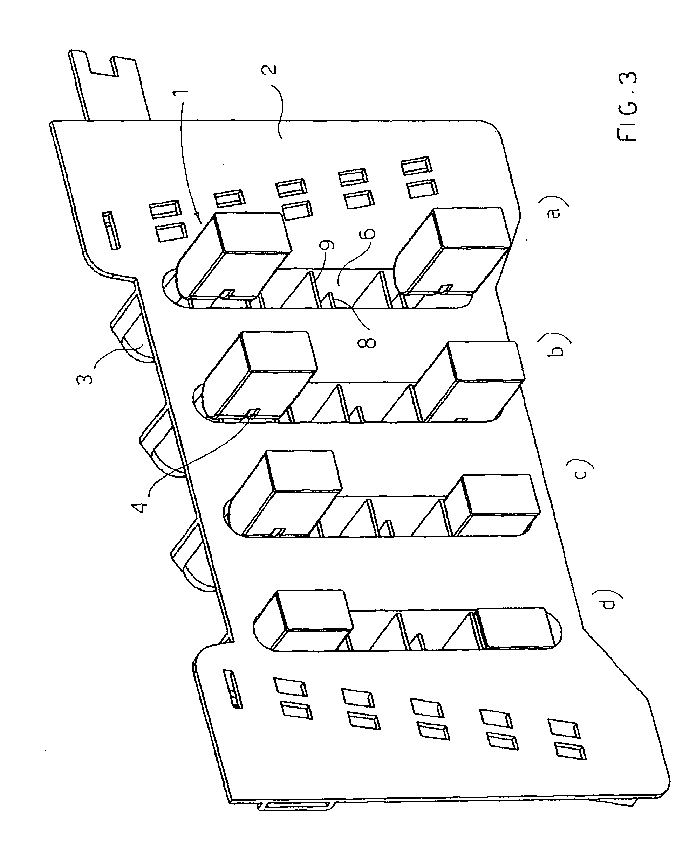

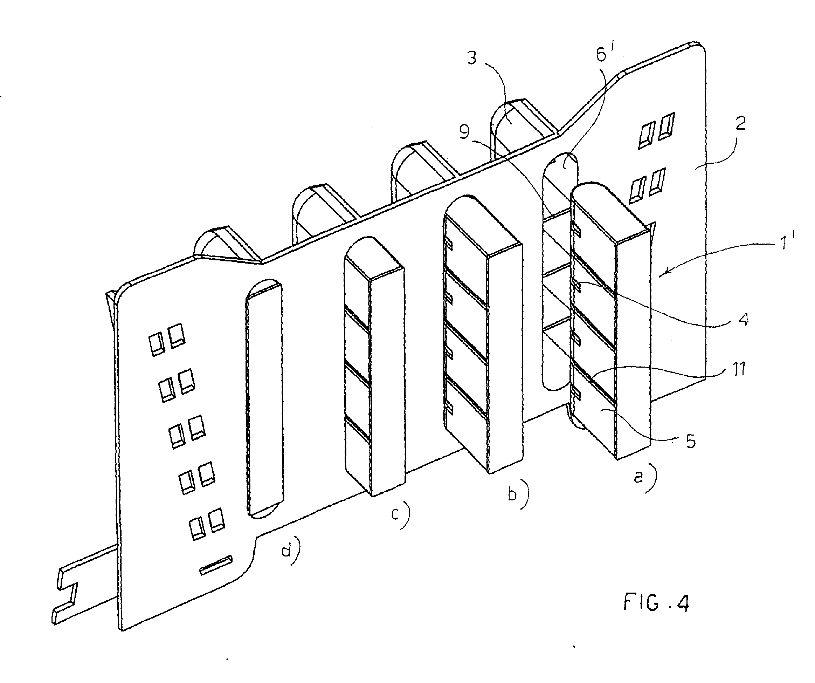

In the present description, the expression "hollow tongue" indicates a hollow body protruding from the body of the spacer, which can be a body with an elongated shape (Figures 3 and 4) or a series of hollow (preferably) cylindrical bodies.

Fluid conveying pipes normally consist of an inner pipe (preferably) of steel or of a plastic material, inserted inside an outer pipe (preferably) of steel or of concrete: the inner pipe is kept centred with respect to the outer pipe by means of a plurality of spacers, which are applied to the outer surface of the inner pipe before it is inserted inside the outer pipe.

Collar-type spacers having an inside diameter (substantially) coinciding with the outside diameter of the inner pipe and a plurality of radial spacer tongues are known to the art and available on the market.

The spacers normally used consist of open collars, each of which is applied to the inner pipe in a pre-set position and is held in place by locking the facing ends of the collar to each other in a per se known manner.

The spacer can consist of a plurality of elements coupled to each other to adapt the inside diameter of the collar to the outside diameter of the inner pipe.

This type of spacer is described, for example, by the European patent No. 1.262.700 in the Applicant's name.

Band-type spacers are also known to the art and available on the market, and comprise:
- a band-shaped body, sufficiently thin to bend so as to wrap around the inner pipe, from which protrudes (in a direction at right angles to the plane of said body) a plurality of spacer tongues;
- means, applied to at least one end of the band-shaped body, adapted to clamp the basic body around the inner pipe.

Such band-type spacers are described, for example, by the European patent No. 1.477.716 in the Applicant's name.

By realising a spacer having hollow spacer tongues, it is possible to reduce the amount of material used to make the spacer and, consequently, to reduce the production cost and the weight of the spacer.

The above advantage is all the more appreciable the thinner the walls of the tongues are, but if the walls are (too) thin, the hollow tongues do not have (or may not have) the necessary mechanical strength to bear the weight of the inner pipe, keeping it centred with respect to the outer pipe.

In order to overcome this drawback, it is necessary to give the walls of the tongues an adequate thickness (thus increasing the cost and the weight of the spacer) or - if the spacer is realised by joining together a plurality of elements - to make two types of elements, one with thick(er) walls for use in the area of the spacer on which the weight of the inner pipe bears, the other with thin(ner) walls for use in the remaining portions of the spacer.

This solution brings obvious problems of procurement and of management of the two types of elements which form the spacer.

Object of the present invention is to provide means adapted to strengthen, where and as much as necessary to bear the weight of the inner pipe on which it is mounted, a light, low-cost and compact spacer, which has a plurality of hollow spacer tongues with thin walls.

This object is achieved by means of reinforcing blocks realised according to the present invention, which have the characterising elements illustrated in claim 1; further advantageous characteristics of the invention form the subject matter of the dependent claims.

Further characteristics of the invention will be made clearer by the detailed description that follows, referring to a purely exemplifying and therefore non-limiting embodiment thereof, illustrated in the appended drawings, in which:
- Figure 1 shows diagrammatically a front view, a side view, a top view and some bottom views, in perspective, of a first block, realised according to the present invention, adapted to occupy a cavity of a hollow tongue of a spacer;
- Figure 2 shows diagrammatically a front view, a side view, and a top view of a second block, realised according to the present invention, adapted to occupy a hollow tongue of a spacer;
- Figure 3 shows diagrammatically a perspective view of a spacer, in which some cavities of the hollow tongues are occupied by blocks like those shown in Figure I;
- Figure 4 shows diagrammatically a perspective view of a spacer whose hollow tongues are occupied by a block like that shown in Figure 2.

In the appended figures like elements will be designated by the same reference numerals.

A block realised according to the invention to reinforce the hollow tongues of a spacer for fluid conveying pipes consists of at least one body (preferably of plastic material) having a height equal to the depth of the at least one cavity presented by a hollow tongue.

If the hollow tongue consists of a series of hollow bodies, the body of the block has a height equal to the depth of the inner cavity of one of the hollow bodies.

The body of a block realised according to the invention advantageously has a shape matching that of the at least one cavity presented by a hollow tongue, or that of the inner cavity of one of the hollow bodies, but without departing from the scope of the invention, the block can have a different shape from that of a cavity presented by a hollow tongue (or from that of the inner cavity of one of the hollow bodies) and/or comprise at least two parts side by side.

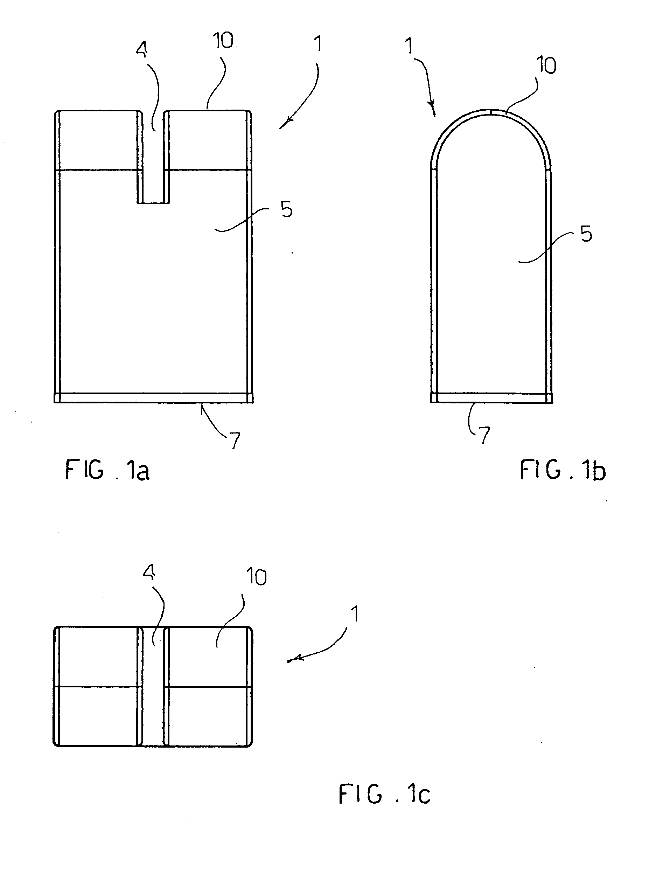

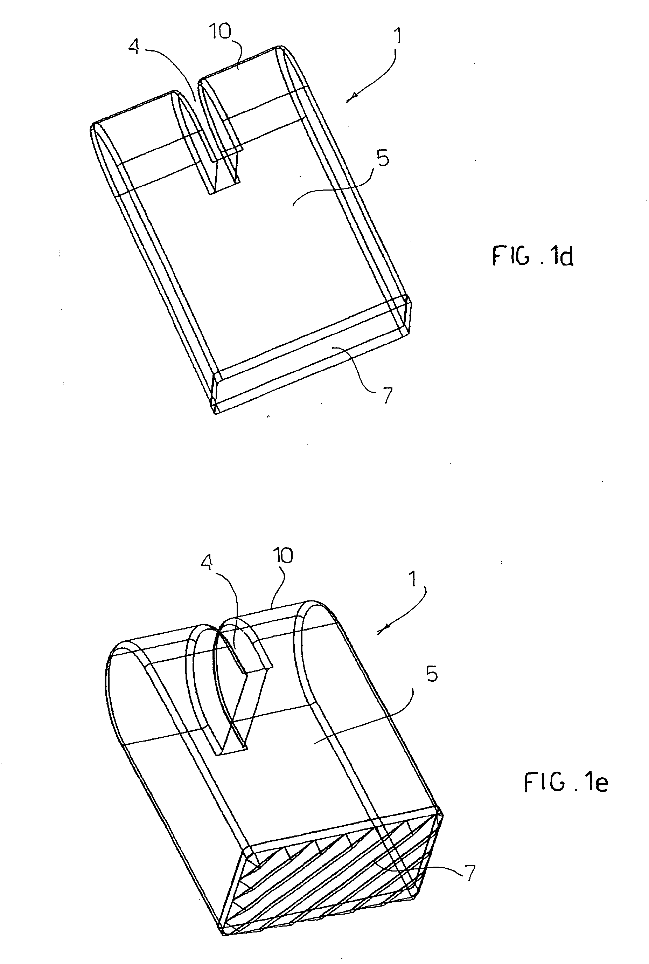

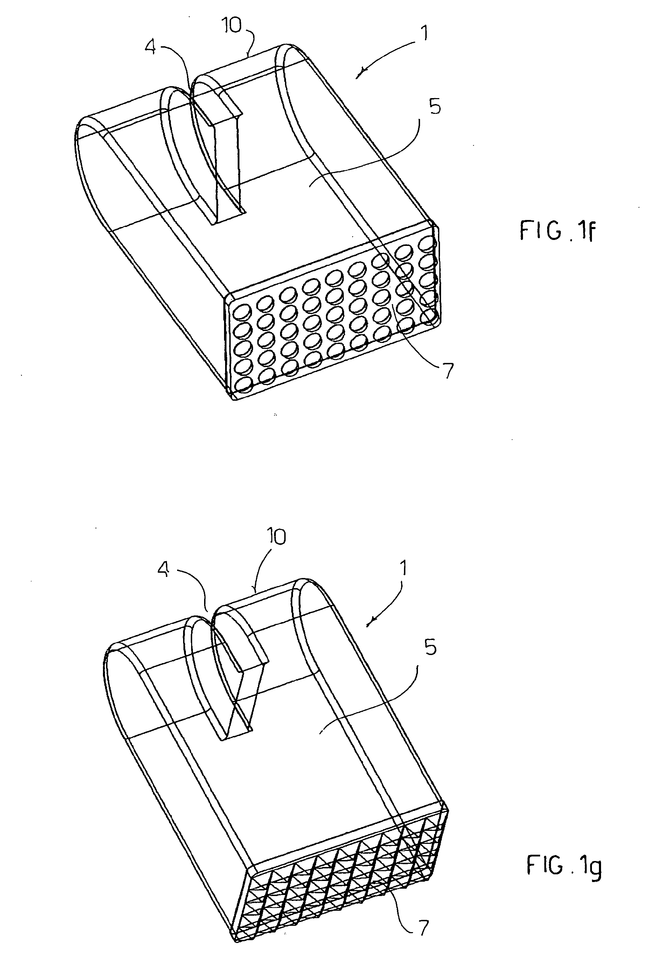

Figure 1 shows diagrammatically a front view (Figure 1a), a side view (Figure 1b), a top view (Figure 1c) and some bottom views, in perspective (Figures 1d-1g), of a first block 1, realised according to the present invention, adapted to occupy a cavity 6 (Figure 3) of a hollow tongue 3 of a spacer 2.

The block 1 consists of a body 5, preferably made of plastic material, having a height equal to that of a cavity 6 and a shape matching that of said cavity; at least the surface 7 of the block 1 placed in contact with the inner pipe is preferably made of or coated with silicone rubber or another functionally equivalent synthetic plastic material.

The surface 7 can be smooth (Figure 1d) or knurled; Figures 1e-1g show, by way of non-limiting example, some possible knurled surfaces 7.

Without departing from the scope of the invention, the whole block 1 can be made of silicone rubber or of another functionally equivalent synthetic plastic material.

Again without departing from the scope of the invention, the block 1 can be made of a metal material (for example: steel) and coated, at least at the surface 7, with silicone rubber or with another functionally equivalent synthetic plastic material.

The block 1 can be completely coated with silicone rubber or with another functionally equivalent synthetic plastic material.

As shown in Figures 3 and 4, the hollow tongues 3 preferably have inside them walls 9 which divide them into a plurality of cavities 6: the body 5 of the block 1 has a shape matching that of said cavities 6.

Furthermore, the body 5 of the block 1 can advantageously have, corresponding with the surface 10 thereof destined to come into contact with the bottom of the cavity 6, a seat 4 adapted to engage in a guide wall 8 (Figure 3) present in the cavities 6 of a hollow tongue 3.

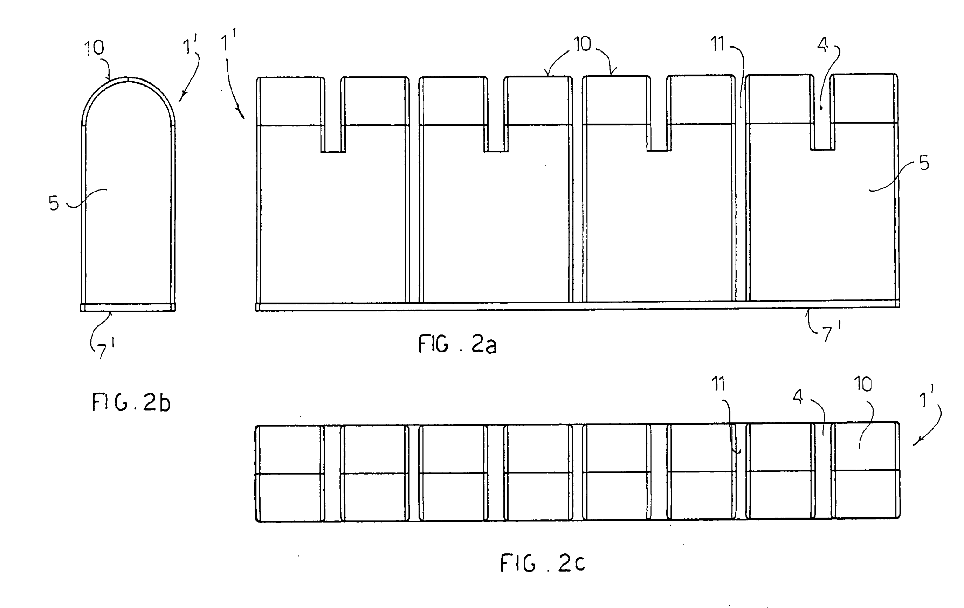

Figure 2 shows diagrammatically a front view (Figure 2a), a side view (Figure 2b), and a top view (Figure 2c) of a second block 1', realised according to the present invention, adapted to occupy all the cavities 6 (Figure 4) of a hollow tongue 3 of a spacer 2.

The block 1' differs from the block 1 in that it comprises a plurality of bodies 5, each of which has (or can have) a seat 4 (adapted to engage in a guide wall 8 present in a cavity 6 of the hollow tongue 3) connected to each other by a surface 7' (preferably made of or coated with silicone rubber) destined to come into contact with the inner pipe.

Like the surface 7, the surface 7' can be smooth or knurled and can have, by way of non-limiting example, one of the knurled surfaces shown in Figures 1e-1g.

In the embodiment illustrated in Figure 2, two contiguous bodies 5 are preferably separated by a space I 1 adapted to accommodate one of the walls 9 which divide a hollow tongue 3 into a plurality of cavities 6.

Without departing from the scope of the invention, the seats 4 and/or the spaces 11 can be omitted if the hollow tongues 3 do not have the guide walls 8 and/or the dividing walls 9.

For the sake of simplicity of the graphic representation, in Figure 2 only one of the seats 4, of the bodies 5 and of the spaces 11 has been identified with the corresponding reference numeral.

Figure 3 shows diagrammatically a perspective view of the inner side of a spacer 2, in which two of the cavities 6 of the hollow tongues 3 are occupied by blocks 1.

In Figure 3 the bocks 1 having the seats 4, the hollow tongues 3, the cavities 6 (possibly) separated by the walls 9 and the (possible) guide walls 8 for the seats 4 are visible; for the sake of simplicity of the graphic representation, in Figure 3 only one of the blocks 1, of the hollow tongues 3, of the seats 4, of the cavities 6, of the guide walls 8 and of the dividing walls 9 has been identified with the corresponding reference numeral.

Four successive steps of the insertion of the blocks 1 into the cavities 6 of the hollow tongues 3 of the spacer 2 are shown in Figure 3, looking at the figure from right to left (positions a-d).

In particular two blocks 1, initially facing the cavities 6 (position a) are progressively inserted into the cavities 6 (positions b and c) until they are completely inserted therein (position d, bottom block 1).

Figure 4 shows diagrammatically a perspective view of the inner side of a spacer 2, in which the hollow tongues 3 are occupied by a block 1'.

In Figure 4 the blocks 1' comprising a plurality of bodies 2 having the seats 4 and divided by the spaces 11, the hollow tongues 3 and the cavities 6 (possibly) divided by the division walls 9 are visible; for the sake of simplicity of the graphic representation, in Figure 4 only one of the blocks 1', of the bodies 2, of the hollow tongues 3, of the seats 4, of the cavities 6, of the dividing walls 9 and of the spaces 11 has been identified with the corresponding reference numeral.

Four successive steps of the insertion of the blocks 1' into a cavity 6 of a hollow tongue 3 of the spacer 2 are shown in Figure 4, looking at the figure from right to left (positions a-d).

In particular the block 1', initially facing the cavity 6 (position a) is progressively inserted therein (positions b and c) until it is completely inserted therein (position d).

A reinforcing block (1, 1') realised according to the invention presents numerous advantages among which is cited, by way of non limiting example, the fact that:
- the layer 7 of plastic material does not damage the inner pipe;
- the weight of the inner pipe compresses the hollow tongues 3 and the blocks (1, 1'), thus making the surface 7 of said blocks to adhere better to the inner pipe and increasing the frictional force between the spacer and the inner pipe;
- by appropriately choosing the material used to realise the body 5, it is possible to give the block (1, 1') the mechanical strength considered most advantageous on a case-by-case basis to meet specific needs.

Without departing from the scope of the invention, a person skilled in the art can make to the block previously described all the modifications and improvements suggested by normal experience and/or by the natural evolution of the art.

## Claims

1. A reinforcing block (1, 1') for the hollow tongues (3) of a spacer (2) for fluid conveying pipes, the spacer (2) having at least one hollow tongue (3), **characterised in that** it comprises at least one body (5) having a height equal to the depth of at least one cavity (6) belonging to the at least one hollow tongue (3).

2. A block (1,1') as in claim 1, **characterised in that** the body (5) has a shape matching that of at least one cavity (6) belonging to the at least one hollow tongue (3).

3. A block (1, 1') as in claim 1, **characterised in that** the body (5) comprises at least two parts side by side with each other.

4. A block (1,1') as in claim 1, **characterised in that** it is made of plastic material.

5. A block (1,1') as in claim 4, **characterised in that** it is made of silicone rubber.

6. A block (1,1') as in claim 1, **characterised in that** the surface (7, 7') thereof in contact with the inner pipe is made of plastic material.

7. A block (1,1') as in claim 1, **characterized in that** the surface (7, 7') thereof in contact with the inner pipe is smooth.

8. A block (1,1') as in claim 1, **characterized in that** the surface (7, 7') thereof in contact with the inner pipe is knurled.

9. A block (1,1') as in claim 1, **characterised in that** the body (5) is made of metal material and is coated, at least on the surface (7, 7') thereof in contact with the inner tube, with a plastic material.

10. A block (1,1') as in claim 1, **characterized in that** the body (5) of the block (1,1') has, corresponding with its surface (10) destined to come into contact with the bottom of the at least one cavity (6), at least one seat (4) able to engage in at least one guide wall (8) present in the at least one cavity (6) of the at least one hollow tongue (3).

11. A block (1') as in at least one of the preceding claims, **characterized in that** it comprises a plurality of bodies (5), connected to each other by a surface (7') destined to come into contact with the inner pipe.

12. A block (1') as in claim 11, **characterized in that** each of the bodies (5) has at least one seat (4) able to engage in at least one guide wall (8) present in one of the cavities (6) of the at least one hollow tongue (3).

13. A block (1') as in claim 11, **characterised in that** two contiguous bodies (5) are separated by a space (11) able to accommodate one of the walls (9) which divide a hollow tongue (3) into a plurality of cavities (6).
